# EUROPÄISCHE PATENTANMELDUNG

(11) **EP 0 737 417 A1**
(43) Veröffentlichungstag der Anmeldung: **16.10.1996**
(21) Anmeldenummer: 95105566.4
(22) Anmeldetag: 12.04.1995
(51) Int. Cl.: A01C 7/08

(54) **Pneumatische Verteilmaschine**

(71) Anmelder: Amazonen-Werke H. Dreyer GmbH & Co. KG, D-49205 Hasbergen (DE)
(72) Erfinder: Gattermann, Bernd, D-27798 Hude 1 (DE)

(57) **Zusammenfassung**

Pneumatische Verteilmaschine, bestehend aus Vorratsbehälter, dem Vorratsbehälter zugeordneten Dosierorganen, von den Dosierorganen zu Verteilorganen (3,3',3'') führenden pneumatischen Förderleitungen (2,2',2'') und von den Verteilorganen (3,3',3'') zu den Ausbringorganen (5,5') führenden Zuleitungen (4). Um hier auf einfache Weise Abhilfe zu schaffen, ist vorgesehen, daß zumindest zwei Gruppen von Dosierorganen vorgesehen sind, daß jeder Guppe von Dosierorganen eine Förderleitung (2,2',2'') mit Verteilorganen (3,3',3'') zugeordnet ist, daß an den Verteilorganen (3,3',3'') über Schläuche (4) Säschare (5,5') angeschlossen sind, daß die eine Gruppe von Dosierorganen über eine Förderleitung (2') und ein Verteilorgan (3') an die sog. Fahrgassensäschare (5') angeschlossen sind, und daß die andere Gruppe oder die anderen Gruppen von Dosierorganen mit ihrer(n) Förderleitung(en) (2,2'') und Verteilorgan(en) (3,3'') an die übrigen Säschare (5) anschlossen sind.

## Beschreibung

Die Erfindung betrifft eine pneumatische Verteilmaschine gemäß des Oberbegriffes des Patentanspruches 1.

Eine derartige Verteilmaschine ist durch die deutsche Offenlegungsschrift 25 19 760 bekannt. Diese pneumatische Verteilmaschine weist einen Vorratsbehälter auf. Unterhalb des Vorratsbehälters sind Dosierorgane angeordnet. Diese Dosierorgane dosieren das sich im Vorratsbehälter befindliche Material über Injektorschleusen in unterhalb der Dosierorgane angeordnete pneumatischen Förderleitungen. Von diesen Förderleitungen wird das Material Verteilorganen zugeführt. Diese Verteilorgane weisen auf ihrem Umfang verteilte Auslaßstutzen auf, von denen aus über Zuleitungen das Material den als Säscharen ausgebildeten Ausbringorganen zugeleitet wird.

Nachteilig ist bei dieser Maschine, daß keine Fahrgassen angelegt werden können.

Durch die deutsche Patentschrift 38 05 148 ist eine pneumatische Verteilmaschine bekannt, die ein Verteilorgan aufweist. Dieses Verteilorgan weist Auslaßstutzen auf, an die zu Säscharen führende Zuleitungen angeschlossen sind. Einigen dieser Auslaßstutzen des Verteilorgans sind Absperrklappen zugeordnet. Den mit den Absperrklappen versehenen Auslaßstutzen sind über Zuleitungsschläuche mit den sog.

Fahrgassensäscharen verbunden. Durch Absperren dieser Zuleitungen mit den Absperrklappen werden Fahrgassen angelegt. Nachteilig ist jedoch hierbei, daß dann die auf die übrigen Auslaßstutzen zwangsläufig sich verteilende Saatgutmenge sich erhöht.

Der Erfindung liegt die Aufgabe zugrunde, hier auf einfache Weise Abhilfe zu schaffen.

Diese Aufgabe wird erfindungsgemäß durch die kennzeichnenden Maßnahmen des Anspruches 1 gelöst. Infolge dieser Maßnahmen ist den Fahrgassensäscharen eine eigene Gruppe von Dosierorganen oder ein eigenes Dosierorgan zugeordnet, welches den Fahrgassensäscharen bei dem "nicht Anlegen der Fahrgassen" das Saatgut zuführt. Wenn Fahrgassen angelegt werden, wird dieses Dosierorgan außer Betrieb gesetzt, so daß den Fahrgassensäscharen kein Material zugeführt wird.

Eine weitere Lösung der erfindungsgemäßen Aufgabe ist im Kennzeichen des Patentanspruches 2 enthalten. Im Unterschied zu der Lösung gemäß des Kennzeichens des Anspruches 1 ist jeder Förderleitung und jedem Verteilorgan nur ein Dosierorgan zugeordnet.

Eine kompakte Ausbildung des Dosierorgan ergibt sich dadurch, daß die beiden Dosierorgane nebeneinander angeordnet und von einer auf den als Dosierrädern ausgebildeten Dosierorganen verschiebbar angeordneten Hülse in zwei Förderbereiche getrennt sind, wobei der eine Förderbereich den Fahrgassensäscharen und der andere Förderbereich den übrigen Säscharen zugeordnet ist. Um in einfacher Weise das Ausbringmengenverhältnis zwischen den Fahrgassensäscharen und den übrigen Säscharen entsprechend dem Verhältnis von Fahrgassensäscharen zu den übrigen Säscharen zu erhalten, kann die Hülse entsprechend verschoben und eingestellt werden. Hierbei kann beispielsweise die Hülse auf den Dosierrädern festklemmbar angeordnet sein.

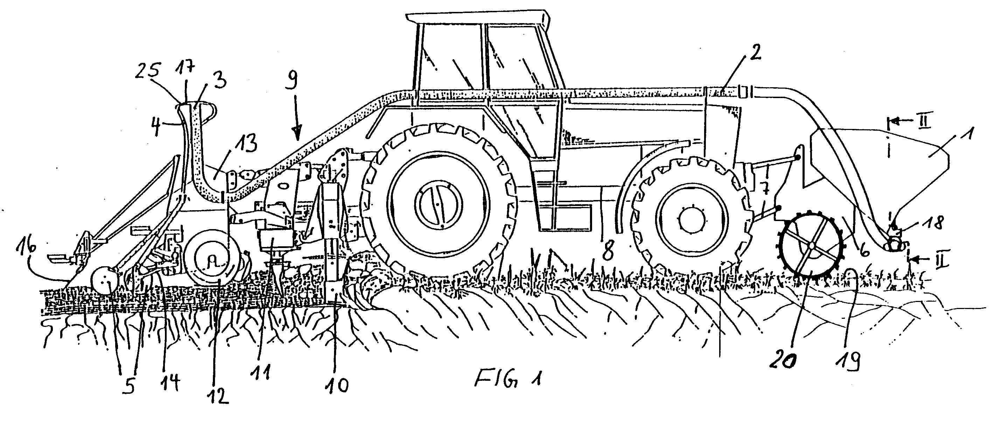

Weitere Einzelheiten der Erfindung sind dem Unteranspruch, der Beispielsbeschreibung und den Zeichnungen zu entnehmen. Hierbei zeigen
- Fig. 1: die pneumatische Verteilmaschine, angebaut an einen Ackerschlepper in Seitenansicht und in Prinzipdarstellung,
- Fig. 2: den im Frontanbau angebauten Vorratsbehälter, in der Ansicht II - II in Prinzipdarstellung und vergrößertem Maßstab und ausschnittsweise,

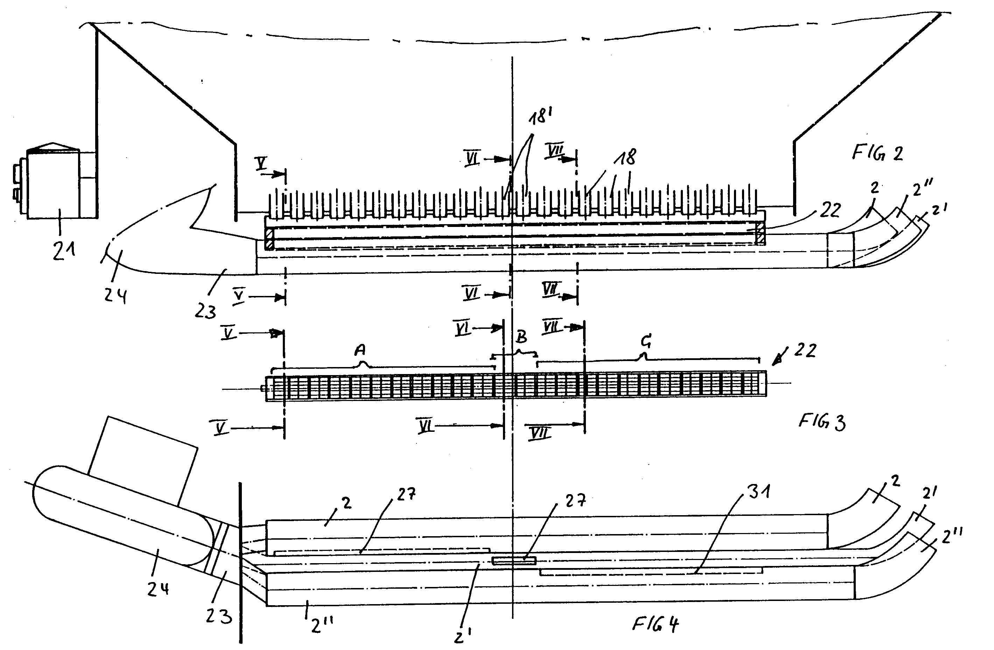

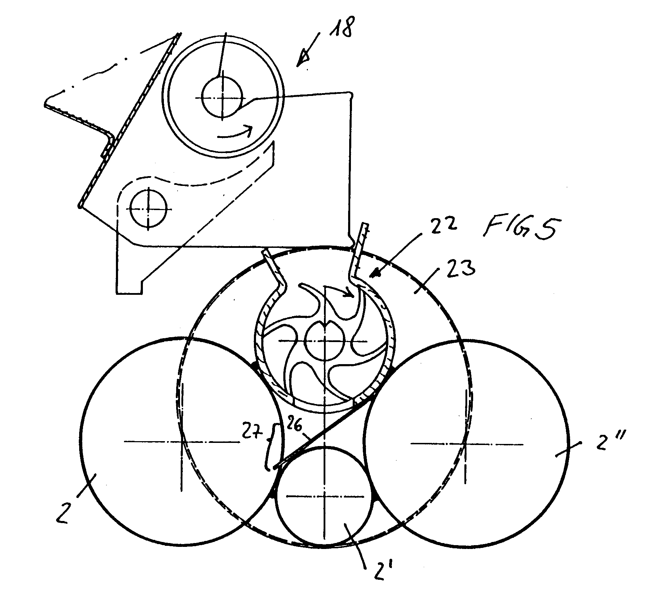

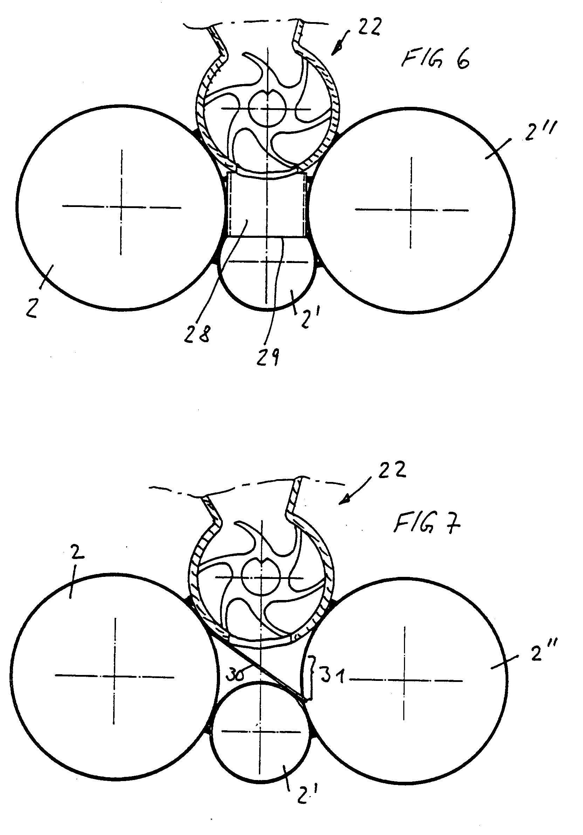

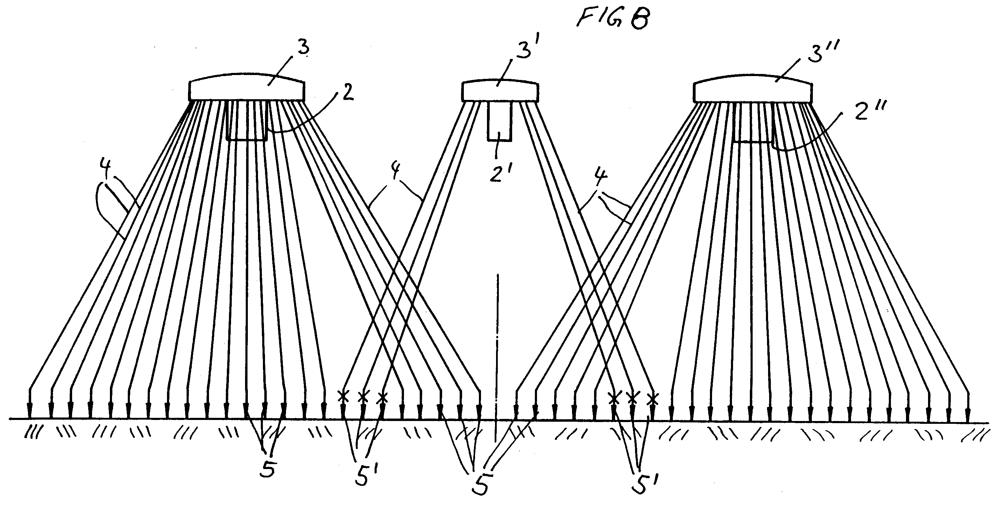

- Fig. 3: die Zellenradschleuse in der Draufsicht,

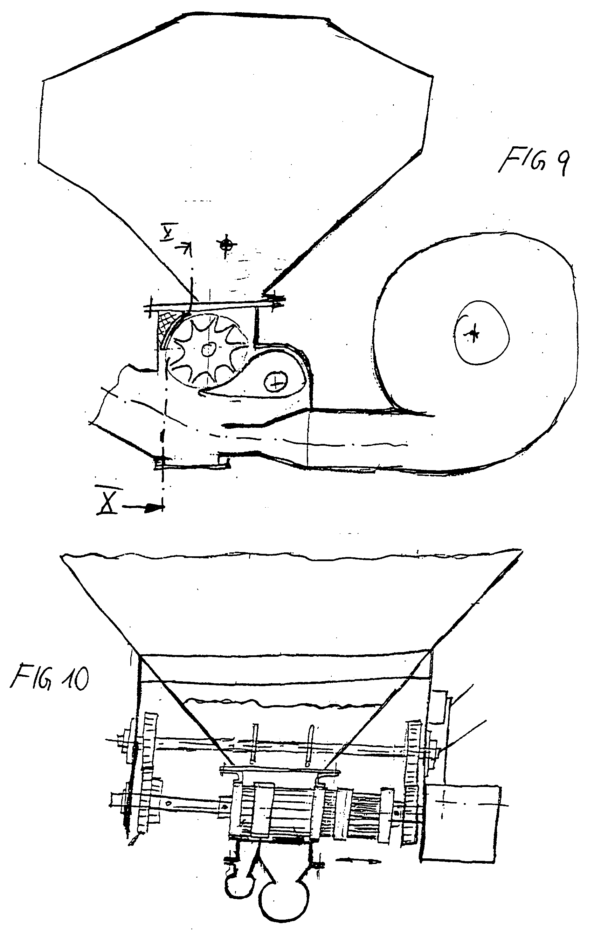

- Fig. 4: die Anordnung der unterhalb der Zellenradschleuse und dem Vorratsbehälter angeordneten Förderleitung in der Draufsicht und in prinzipdarstellung,
- Fig. 5: die Zuordnung von Dosiersystem, Zellenradschleuse und Förderleitung in der Ansicht V - V in vergrößertem Maßstab und in Prinzipdarstellung,
- Fig. 6: die Zuordnung von Zellenradschleuse und Förderleitung in der Ansicht VI - VI in vergrößertem Maßstab und in Prinzipdarstellung,
- Fig. 7: die Zuordnung von Zellenradschleuse und Förderleitung in der Ansicht VII - VII in vergrößertem Maßstab und in Prinzipdarstellung,
- Fig. 8: die Zuordnung der Verteilorgane und Zuleitungen zu den Säscharen in Prinzipdarstellung und in der Ansicht von hinten,
- Fig. 9: eine weitere Verteilmaschine in Teilansicht und in Prinzipdarstellung und
- Fig. 10: die Ausbildung des Dosierorgans in der Ansicht X - X in Prinzipdarstellung.

Die pneumatische Verteilmaschine weist den Vorratsbehälter 1, die Förderleitungen 2, die Verteilorgane 3, die Zuleitungen 4 zu den als Säscharen 5 ausgebildeten Ausbringorganen auf. Der Vorratsbehälter 1 ist als Fronttank ausgebildet und mit seinem Rahmen 6 an dem Frontkraftheber 7 des Ackerschleppers 8 angeordnet. Hinter dem Ackerschlepper 8 ist die Bodenbearbeitungskombination 9 angeordnet. Die Bodenbearbeitungskombination 9 besteht aus dem Tiefenlockerungsgrubber 10, der Kreiselegge 11 und der Bodenwalze 12. An dem Rahmen 13 der Bodenwalze 12 sind in aufrechter Ebene bewegbar über Scharhalterungen 14 die Säschare 5 angeordnet. Hinter den Säscharen 5 ist über das Gestänge 15 an dem Rahmen 13 der Bodenwalze 12 der Saatstriegel 16 angebracht. Weiterhin sind an dem Rahmen 13 der Bodenwalze 12 die Verteilorgane 3, die als Prallköpfe ausgebildet sind, angeordnet. Die Prallköpfe 3 weisen mehrere Auslaßstutzen 17 auf, an denen die zu den Säscharen 5 führenden Zuleitungsschläuche 4 angeschlossen sind.

Der Vorratsbehälter 1 ist in seinem unteren Bereich als langgestreckter Trichter ausgebildet. Im unteren Bereich des Vorratsbehälters 1 sind im Bereich der Trichterspitze nebeneinander die Dosierorgane 18 angeordnet. Die Dosierorgane 18 werden über das auf dem Boden 19 abrollende Rad 20, welches als Sporenrad ausgebildet ist und über das Regelgetriebe 21 über eine nicht dargestellte Antriebsverbindung angetrieben. Unterhalb der Dosierorgane 18 ist die Zellenradschleuse 22 angeordnet. Unterhalb der Zellenradschleuse 22 sind drei Förderleitungen 2,2',2'' angeordnet, denen in weiter unten beschriebener Weise über die Zellenradschleuse 22 das von den Dosierorganen 18 aus dem Vorratsbehälter 1 dosierte Saatgut zugeleitet wird. An den Förderleitungen 2, 2', 2'' ist mittels des Verteilers 23 das Gebläse 24 angeschlossen. Die Förderleitungen 2, 2', 2'' führen das Saatgut den hinter dem Schlepper 8 angeordneten Verteilorganen 3, 3', 3'' zu. In den Verteilorganen 3, 3', 3'' wird das Saatgut gleichmäßig auf die einzelnen Auslaßstutzen 25 der Verteilorgane 3, 3', 3'' und somit auf die zu den Säscharen 5 führenden Zuleitungen 4 zugeleitet.

Die Zellenradschleuse 22 ist in die drei Bereiche A, B und C unterteilt. Der Bereich A führt das Material über die als Rutsche 26 ausgebildeten Leitorgane, welche zwischen der Zellenradschleuse 22 und der Förderleitung 2 angeordnet ist, das Material in die sich in der Förderleitung 2 befindenden Schlitz 27 ein. Von hier aus gelangt das Gut zu dem Verteilorgan 3. Der Bereich B der Zellenradschleuse 22 leitet das Gut über den Schacht 28, durch den sich in der Förderleitung 2' befindlichenden Ausschnitt 29 in die Förderleitung 2' ein. Von hier aus gelangt das Gut zu dem Verteilorgan 3'. Der Bereich C der Zellenradschleuse 22 leitet das Gut über das als Rutsche 30 ausgebildete Leitorgan durch den sich in der Förderleitung 2'' befindenden Schlitz 31 in die Förderleitung 2'' ein. Von dieser Förderleitung 2'' gelangt das Gut zu dem Verteilorgan 3''.

Die Zellenradschleuse 22 ist also in drei Abschnitte unterteilt. Jeder Abschnitt A, B oder C der Zellenradschleuse 22 schleust das Material in eine andere Förderleitung 2, 2' oder 2'' ein.

Das Zellenrad der Zellenradschleuse 22 kann gemeinsam oder unabhängig von den Dosierorganen 18 angetrieben werden.

Wie ein einfacher Blick auf die Zeichnungen zeigt, sind mehrere Dosierorgane 18 einem Abschnitt A, B, C der Zellenradschleuse 22 und einer Förderleitung 2, 2', 2'' zugeordnet.

Der mittlere Bereich B der Zellenradschleuse 22 und die mittleren Dosierorgane 18' sind dem Verteilorgan 3' zugeordnet. Dieses Verteilorgan 3' ist über die Zuleitungen 4' mit die sog. Fahrgassensäschare 5 verbunden. Zum Anlegen von Fahrgassen wird der Antrieb der Dosierorgane 18' unterbrochen, so daß kein Gut in die Förderleitung 2' eingespeist wird. Dieses Abschalten der Dosierorgane 18' erfolgt über eine bekannte und daher nicht näher dargestellte Abschalteinrichtung.

Die pneumatische Verteilmaschine gemäß den Fig. 9 und 10 weist den Vorratsbehälter 32, die Förderleitungen 33 und 34, die zu einzelnen Verteilorganen führen, die Dosierorgane 35 und 36 und das Gebläse 37 auf. Der Vorratsbehälter 32 ist in seinem unteren Bereich trichterförmig ausgebildet. Im unteren Bereich des Vorratsbehälters 32 befindet sich die Auslaßöffnung 38, unter der als die Dosierräder 35 und 36 ausgebildeten Dosierorgane angeordnet sind. Die Dosierräder 35 und 36 bestehen aus Zellenrädern, die über ein einstellbares Regelgetriebe 39 von einer Kraftquelle mit unterschiedlichen Drehzahlen antreibbar sind. Über die Drehzahl der Dosierräder 35 und 36 wird die Ausbringmenge bestimmt. Unterhalb der Dosierräder 35 und 36 befinden sich die Venturischleusen 40, über welche das von Dosierrädern 35 und 36 dosierte Saatgut in die Förderleitungen 33 und 34 eingeschleust wird. Zusätzlich zu den Normaldosierrädern 35 und 36 sind die Feindosierräder 41 und 42 vorgesehen. Die Dosierräder 35, 36, 41 und 42 sind auf der Dosierwelle 43 angeordnet. Von dem Regelgetriebe 39 aus wird über das Zahnrad 44 das auf der Vorgelegewelle 45 angeordnete Zahnrad 46 angetrieben. Über dieses Zahnrad wird die Vorgelegewelle 45 und das weitere auf der Vorgelegewelle angeordnete Zahnrad 47 angetrieben, welches das Zahnrad 48 antreibt. Das Dosierrad 35 wird von der verlängerten Welle 49 des Regelgetriebes 39 getrieben. Das Dosierrad 36 wird über die Vorlegewelle 45 und der Welle 50 angetrieben. Zwischen der Welle 50 und dem Zahnrad 48 ist eine als Schlingfederkupplung 51 ausgebildete Kupplung geordnet, über welche das Dosierrad 36 für das Anlegen von Fahrgassen stillgesetzt wird. Es ist auch möglich, die Dosierwelle einteilig für beide Dosierräder 35 und 36 auszubilden und unmittelbar zwischen dem Dosierrad 36 und der Dosierwelle eine Kupplung 51 anzuordnen. In diesem Falle können die Zahnräder 47 und 48 sowie eine geteilte Dosierwelle entfallen. Auf diesen Dosierrädern 35 und 36 befindet sich die verschiebbar angeordnete Hülse 52, die den Fahrgassenförderbereich 53 von dem übrigen Förderbereich 54 trennt. Diese Hülse 52 ist verschiebbar angeordnet, so daß die Saatgutaufteilung dem Verhältnis von den Fahrgassensäscharen zu den übrigen Säscharen entspricht. Die Hülse 52 kann in der entsprechenden Position mittels eines geeigneten Klemmittels festgeklemmt werden.

Außerhalb des Bereiches befindet sich der von den Dosierrädern 41 und 42 gebildete Feindosierbereich 55, der wahlweise anstelle des von den Dosierrädern 35 und 36 gebildeten Normaldosierbereiches 56 zum Einsatz kommen kann. Hier ist es dann erforderlich, alle Dosierräder entsprechend auf der Dosierwelle zu verschieben.

## Patentansprüche

1. Pneumatische Verteilmaschine, bestehend aus Vorratsbehälter (1), dem Vorratsbehälter (1) zugeordneten Dosierorganen (18,18'), von den Dosierorganen (18,18') zu Verteilorganen (3,3',3'') führenden pneumatischen Förderleitungen (2,2',2'') und von den Verteilorganen (3,3',3'') zu den Ausbringorganen (5,5') führenden Zuleitungen (4), dadurch gekennzeichnet, daß zumindest zwei Gruppen von Dosierorganen (18,18') vorgesehen sind, daß jeder Guppe von Dosierorganen (18,18') eine Förderleitung (2,2',2'') mit Verteilorganen (3,3',3'') zugeordnet ist, daß an den Verteilorganen (3,3',3'') über Schläuche (4) Säschare (5,5') angeschlossen sind, daß die eine Gruppe von Dosierorganen (18') über eine Förderleitung (2') und ein Verteilorgan (3') an die sog. Fahrgassensäschare (5') angeschlossen sind, und daß die andere Gruppe oder die anderen Gruppen von Dosierorganen (18) mit ihrer(n) Förderleitung(en) (2,2'') und Verteilorgan(en) (3,3'') an die übrigen Säschare (5) anschlossen sind.

2. Pneumatische Verteilermaschine, bestehend aus Vorratsbehälter (1), dem Vorratsbehälter (1) zugeordneten Dosierorganen (18,18'), von den Dosierorganen (18,18') zu Verteilorganen (3,3',3'') führenden pneumatischen Förderleitungen (2,2',2'') und von den Verteilorganen (3, 3',3'') zu den Ausbringorganen (5,5') führenden Zuleitungen (4), dadurch gekennzeichnet, daß zumindest zwei Dosierorgane (18,18') vorgesehen sind, daß jedem Dosierorgan (18,18') eine Förderleitung (2,2',2'') mit Verteilorgan (3,3',3'') zugeordnet ist, daß an dem Verteilorgan (3,3',3'') über Schläuche (4) Säschare (5,5'') angeschlossen sind, daß das eine Dosierorgan (18') über die Förderleitung (2') und das Verteilorgan (3') an die sog. Fahrgassensäschare (5') angeschlossen ist, und daß das andere oder die anderen Dosierorgane (18) mit ihrer(n) Förderleitung(en) (2,2'') und Verteilorgan(en) (3,3'') an die übrigen Säschare (5) angeschlossen sind.

3. Verteilmaschine nach Anspruch 1 oder 2, dadurch gekennzeichnet, daß der Antrieb für das den Fahrgassensäscharen (5') zugeordnete Dosierorgan (18') unabhängig von dem Antrieb die den übrigen Säscharen (5) zugeordnete Dosierorgan (18) ein- und ausschaltbar ist.

4. Verteilmaschine nach Anspruch 2, dadurch gekennzeichnet, daß die beiden Dosierorgane nebeneinander angeordnete und von einer auf den als Dosierrädern ausgebildeten Dosierorganen verschiebbar angeordneten Hülse in zwei Förderbereiche getrennt sind, wobei der eine Förderbereich den Fahrgassensäscharen und der andere Förderbereich den übrigen Säscharen zugeordnet ist.

5. Verteilmaschine nach Anspruch 4, dadurch gekennzeichnet, daß die Hülse auf den Dosierrädern festklemmbar angeordnet ist.
